# EUROPÄISCHE PATENTSCHRIFT

(11) **EP 1 401 092 B1**
(45) Veröffentlichungstag und Bekanntmachung des Hinweises auf die Patenterteilung: **03.11.2010**
(21) Anmeldenummer: 03021058.7
(22) Anmeldetag: 18.09.2003
(51) Int. Cl.: H02P 5/74

(54) **Schalteinrichtung zur Ansteuerung wenigstens zweier Motoren**
Switching device for driving at least two motors
Dispositif de couplage pour commander au moins deux moteurs

(30) Priorität: 19.09.2002 DE 20214764 U
(43) Veröffentlichungstag der Anmeldung: 24.03.2004
(73) Patentinhaber: STÖBER ANTRIEBSTECHNIK GmbH & Co., D-75177 Pforzheim (DE)
(72) Erfinder: Kalender, Tomas Dr., 75181 Pforzheim (DE)
(74) Vertreter: Jackisch-Kohl, Anna-Katharina

(56) Entgegenhaltungen:
- US-A- 4 464 615
- US-A- 4 641 069
- US-A- 4 837 491
- US-A- 5 490 056
- PATENT ABSTRACTS OF JAPAN Bd. 1996, Nr. 07, 31. Juli 1996 (1996-07-31) -& JP 08 080092 A (TOYOTA AUTOM LOOM WORKS LTD), 22. März 1996 (1996-03-22)
- PATENT ABSTRACTS OF JAPAN Bd. 1997, Nr. 11, 28. November 1997 (1997-11-28) -& JP 09 191681 A (AICHI ELECTRIC CO LTD; PARAMOUNT BED CO LTD), 22. Juli 1997 (1997-07-22)

## Beschreibung

Die Erfindung betrifft eine Schalteinrichtung zur Ansteuerung wenigstens zweier Motoren nach dem Oberbegriff des Anspruches 1.

Es gibt in der Praxis viele Servoachsen, die nur selten oder aber nicht gleichzeitig benötigt werden. Zu den selten benötigten Servoachsen zählen beispielsweise Antriebe zur Maschinen(um)konfiguration, die zum Beispiel nur bei einem Produktwechsel in Anspruch genommen werden. Bei anderen Maschinen können es Kinematik oder die Sicherheit verbieten, dass bestimmte Servoachsen gleichzeitig Bewegungen ausführen.

Es ist bekannt, dass jedem Motor ein eigener Umrichter zugeordnet wird. Dies verursacht erhebliche Kosten.

Ein herkömmlicher Servoantrieb besteht unter anderem aus einem Servoumrichter mit einer Endstufe (Leistungsverstärker) und der zugehörigen Steuerelektronik, einem Motor, einem Lage/Drehzahl- oder Beschleunigungssensor als Feedback für die Motorregelung, einem Motortemperaturfühler und einer optionalen Haltebremse. Der Sensor ist meist unmittelbar an der Motorwelle montiert. Die optionale Haltebremse ist in der Regel an der Motorwelle vorgesehen. Es sind Servoumrichter für eine Achse und Umrichter für mehrere Achsen in einem Gehäuse bekannt. In jedem Falle ist jedem Motor eine Endstufe bzw. ein Servoumrichter zugeordnet.

Bei der bekannten Schalteinrichtung (US-A-4 641 069) werden Motoren mit nur einem einzigen Umrichter angesteuert. Jedem Motor ist ein Pulsgenerator als Feedback-Sensor zugeordnet. Die Sensoren senden Geschwindigkeitsimpulse an einen Logikbaustein, der aus den Signalen Ausgangssignale erzeugt, die über einen Verstärker einem Pulsweitenmodulatör zugeführt werden, dessen Ausgangssignale dem Umrichter zugeführt werden. Er schaltet entsprechend den Signalen den jeweiligen Motor.

Bei einer anderen bekannten Schalteiririchtung (US-A-4 837 491) sind den Motoren Pulsgeneratoren zugeordnet, die ihre Signale über einen Schalter einer Logikbaustufe zuführen. Sie erzeugt ein Ausgangssignal, das über einen pulsweitenmodulierten Schaltkreis dem Umrichter zugeführt wird.

Der Erfindung liegt die Aufgabe zugrunde, die gattungsgemäße Schalteinrichtung so auszubilden, dass in konstruktiv einfacher und kostengünstiger Weise mehrere Motoren sequentiell betrieben werden können.

Diese Aufgabe wird bei der gattungsgemäßen Schalteinrichtung erfindungsgemäß mit den kennzeichnenden Merkmalen des Anspruches 1 gelöst.

Bei der erfindungsgemäßen Schalteinrichtung werden mehrere Motoren an dem einzigen Servoverstärker bzw. Umrichter betrieben. Die Logikbaustufe erhält vom Umri,chter Signale zur Auswahl eines der Motoren und schaltet daraufhin alle benötigten Leitungen des gewählten Motors auf die entsprechenden Schnittstellen des Umrichters um. Die Genauigkeit und die Auflösung der Rückmelde- bzw. Feedback-Signale werden nicht beeinträchtigt, so dass die erfindungsgemäße Schalteinrichtung auch bei hochempfindlichen analogen Systemen, wie einem Resolver oder einem Sinus/Kosinus-Geber eingesetzt werden kann. Die EMV-Störfestigkeit der Rückmeideleitungen wird nicht beeinträchtigt. Es ist auch möglich, eine Drahtbrucherkennung so auszuführen, dass sie während des Umschaltens auf den gewünschten Motor nicht anspricht. Die Rückmelde-Auswertung im Umrichter führt bei der Umschaltung auf den gewünschten Motor nicht zu Fehlern. Die Logikbaustufe ist an den Ausgang des Umrichters angeschlossen. Die Feedback-Sensoren sind an den Eingang des Umrichters angeschlossen und senden dementsprechend ihre Signale an den Umrichter. Sie werden im Umrichter ausgewertet und über den Ausgang dem Logikbaustein zugeführt, der aufgrund dieser Signale auf den entsprechenden Motor und den zugehörigen Feedback-Sensor umschaltet.

Die einzelnen Antriebe/Motoren werden vorteilhaft im Lageregelkreis betrieben. Bei einer vorteilhaften Ausführung ist dabei sichergestellt, dass nach jeder Umschaltung jeweils der korrekte Positions-Istwert des Motors zur Verfügung steht, so dass eine Referenzfahrt nach jeder Umschaltung vermieden wird. Stehen für die Positionsmessung keine Absolutwertgeber zur Verfügung, werden hierbei die Positions-Istwerte vorteilhaft gespeichert.

Die Positionsberechnung im Umrichter kommt mit jeweils unterschiedlichen Sensor-, Motor- und Mechanikparametern, zum Beispiel Getriebeübersetzungen, in den einzelnen Achsen zurecht. Über die Schalteinrichtung, insbesondere die Umschaltbaugruppe, können die Haltebremse angesteuert sowie eventuell vorhandene Temperaturfühler ausgewertet werden.

Weitere Merkmale der Erfindung ergeben sich aus den weiteren Ansprüchen, der Beschreibung und den Zeichnungen.

Die Erfindung wird anhand dreier in den Zeichnungen dargestellter Ausführungsformen näher erläutert. Es zeigen
- Fig. 1: eine erste Ausführungsform einer erfindungsgemäßen Schalteinrichtung,
- Fig. 2: eine zweite Ausführungsform einer erfindungsgemäßen Schalteinrichtung,
- Fig. 3: eine dritte Ausführungsform einer erfindungsgemäßen Schalteinrichtung.

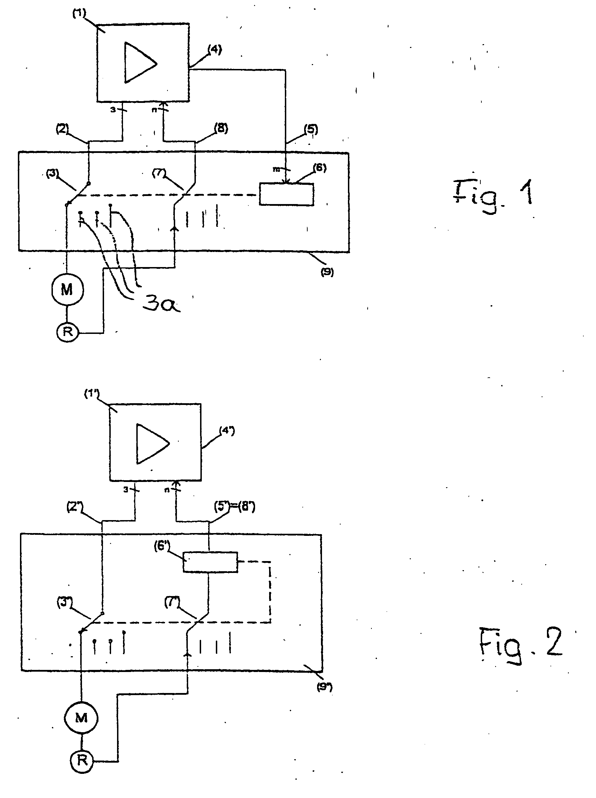

Die Schalteinrichtung gemäß Fig. 1 dient zur Ansteuerung von Motoren M und hat einen einzigen Servoumrichter 1, mit dem die einzelnen Motoren M angesteuert werden. Der Umrichter 1 ist über eine Leitung 2 mit einem Leistungsschalter 3 verbunden, mit dem der jeweilige Motor M geschaltet werden kann. In Fig. 1 ist lediglich ein Motor M dargestellt. Von den übrigen Motoren sind lediglich die Schaltkontakte 3a zu erkennen.

Der Umrichter 1 hat die Schnittstelle 4. An diese Schnittstelle 4 sind Steuerleitungen 5 angeschlossen, die den Umrichter 1 mit einem Logikbaustein 6 verbinden. Der Logikbaustein 6 wertet die vom Umrichter 1 kommenden Signale aus und erzeugt entsprechend dieser Signale Schaltsignale, mit denen der Schalter 3 betätigt wird. Entsprechend dem Signal wird der Schalter 3 so geschaltet, daß er auf den gewünschten Motor M umschaltet.

Jeder Motor M hat einen Feedbacksensor R, der über jeweils eine Leitung 8 über einen Schalter 7 mit dem Umrichter 1 verbunden ist. In Fig. 1 sind für die weiteren Sensoren R lediglich die entsprechenden Schaltkontakte dargestellt. Die beiden Schalter 3 und 7 werden vom Logikbaustein 6 gleichzeitig geschaltet, so daß der gewünschte Motor M mit dem zugehörigen Sensor R geschaltet werden. Auch die Ansteuerung einer Haltebremse oder die Signale eines Temperaturfühlers können über weitere Schalter entsprechend geschaltet werden.

Die verwendeten Schalter 3, 7 arbeiten als Multiplexer.

Die Überwachung des ausgewählten Motors M erfolgt über die Leitung 8, über welche der Sensor R Signale zurück zum Umrichter 1 sendet. Die Rücksignale werden von ihm ausgewertet.

Der Logikbaustein 6 mit den Schaltern 3, 7 ist Bestandteil einer Optionsbaugruppe 9. Sie empfängt in der beschriebenen Weise vom Umrichter 1 die Signale zur Auswahl eines von mehreren Motoren M und schaltet daraufhin alle benötigten Leitungen des gewählten Motors M auf die entsprechenden Schnittstellen 4 des Umrichters 1. Die Leitungsumschaltung kann elektromechanisch oder elektronisch erfolgen. Die Schalter 3, 7 sind im dargestellten Ausführungsbeispiel innerhalb der Optionsbaugruppe 9 vorgesehen. Sie können sich aber auch außerhalb der Optionsbaugruppe 9 befinden, das heißt durch externe Schalter gebildet sein. Der Umrichter 1 ist über m-Steuerleitungen 5 mit dem Logikbaustein 6 verbunden. Die Motoren M sind über n-Leitungen 8 an den Umrichter 1 angeschlossen.

Die Ausführungsform gemäß Fig. 2 verwendet anstelle der m-Steuerleitungen 5 eine einzige Steuerleitung 5'. Sie ist im Unterschied zu den Steuerleitungen 5 eine bidirektionale Leitung, über die Signale vom Umrichter 1' zum Logikbaustein 6' und umgekehrt übertragen werden. Soll einer der Motoren M betätigt werden, wird vom Servoumrichter 1' über die bidirektionale Steuerleitung 5' ein entsprechendes Signal an den Logikbaustein 6' geliefert, der Teil der Optionsbaugruppe 9' ist. Der Logikbaustein 6' wertet das über die bidirektionale Leitung 5' gelieferte Signal aus und schaltet die beiden Schalter 3', 7' entsprechend der vorigen Ausführungsform gleichzeitig um. Die Rücksignale zur Überwachung des jeweils angesteuerten Motors M erfolgt entsprechend der vorhergehenden Ausführungsform über den Logikbaustein 6'. Über die bidirektionale Leitung 5' gelangen die Signale vom Logikbaustein 6' zum Servoumrichter 1'.

Ein Vergleich mit der Ausführungsform nach Fig. 1 zeigt, daß die bidirektionale Steuerleitung 5' die Steuerleitungen 5 und die Leitung 8 der Ausführungsform gemäß Fig. 1 ersetzt. Das Ausführungsbeispiel nach Fig. 2 arbeitet im übrigen gleich wie das vorige Ausführungsbeispiel.

Der Umrichter 1 enthält eine Software, welche die Ansteuerung der Umschalteinrichtung, das Timing zum Umschalten auf die einzelnen Motoren M, die Verwaltung von Maschinendaten und Parametersätzen für jeden einzelnen Motor M sowie die Positionserfassung jedes einzelnen Motors M enthält. Mit dieser Software können somit die Positions-Istwerte der sequentiell anzusteuernden Motoren M getrennt verwaltet und Positionieraufgaben mit unterschiedlichen Maschinendaten in den einzelnen Achsen erledigt werden.

Die beschriebenen Ausführungsformen führen zu einer anwenderfreundlichen sequentiellen Zuschaltung von mehreren Servomotoren M an den Servoumrichter 1, 1', der ein Einachs-Servoumrichter ist. Die Optionsbaugruppe 9, 9' bzw. der Logikbaustein 6, 6' empfangen vom Umrichter 1, 1' die Signale zur Auswahl eines von mehreren Motoren M und schalten daraufhin alle benötigten Leitungen des ausgewählten Motors M auf die entsprechenden Schnittstellen 4 des Umrichters 1, 1'. Der Logikbaustein 6, 6' filtert die Auswahlsignale und schaltet die einzelnen Signal- und Leistungsleitungen um. Die Leistungsschalter 3, 3', können integrierter Bestandteil der Optionsbaugruppe 9, 9' sein. Es ist aber auch möglich, die Leistungsschalter 3,3' als eigenständige Schütze, Relais und ähnliches auszubilden. In diesem Fall übernimmt die Optionsbaugruppe 9, 9' deren Ansteuerung.

Für eine korrekte Funktion der Schalteinrichtung sind die Hardware und die Firmware des Umrichters 1, 1' so vorgesehen, daß Probleme bei einer Umschaltung der Feedback-Leitungen 8, 5' nicht auftreten. Da die Soft- bzw. Firmware der Schalteinrichtung die Positions-Istwerte der sequentiell angesteuerten Motoren M verwaltet, ist sichergestellt, daß nach einer Motorumschaltung stets die korrekte IstPosition der jeweiligen Achse zur Verfügung steht.

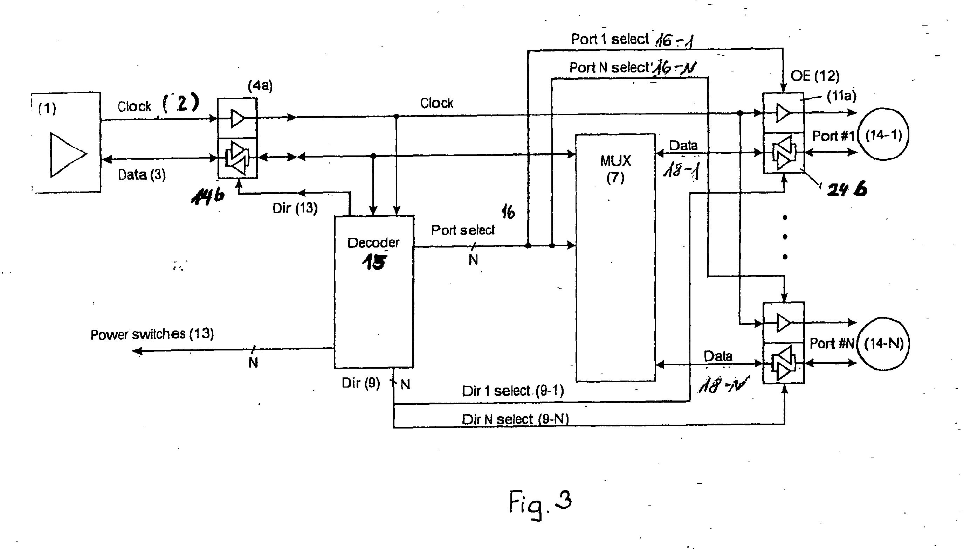

Bei der Ausführungsform gemäß Fig. 3 ist der Umrichter 1 an einen Multiplexer 7 angeschlossen, der abwechselnd mehrere Motoren (Encoder) 14-1 bis 14-N mit einer bidirektikonalen Schnittstelle mit dem Umrichter verbindet. Der Multiplexer 7 erzeugt gleichzeitig unabhängig von der Schalterstellung des Multiplexers 7 zusätzliche Signale 13. Die Ansteuerung des Multiplexers 7 erfolgt über Encoderleitungen CLOCK 2 und DATA 3.

Dem Multiplexer 7 ist ein Decoder 15 vorgeschaltet. Er analysiert den Datenstrom und steuert, auch ohne Anwesenheit der genannten Spezialbefehle, die Richtung von bidirektionalen Treibern 14b, 24b zum ersten Encoder 14-1 am Portkreuz 1. Zur Auswahl eines anderen Encoderports *N sendet der Umrichter 1 über die bidirektionale Schnittstelle spezielle, binär codierte Befehle. Sie sind so beschaffen, daß sie keine relevante Auswirkung auf das Encoderverhalten haben und von ihm ignoriert werden.

Der Decoder 15 generiert anhand der Befehle N Signale 16 zur Steuerung des Multiplexers 7 sowie Signale 9-1 bis 9-N zur Richtungsumschaltung der bidirektionalen Treiber 11 b. Der Multiplexer 7 schaltet entsprechend dem decodierten Befehl eine der N bidirektionalen Datenleitungen 18-1 bis 18-5 von den zugehörigen Encodern 14-1 bis 14-N an eine Datenleitung 23 des Umrichters 1.

Bei der Verwendung von Schnittstellen mit einem CLOCK-Signal können die zugehörigen Treiber 11 a bei allen inaktiven Schnittstellen über das Signal "output enable" OE 12 deaktiviert werden.

Die Befehle zur Steuerung des Multiplexers 7 können ferner zusätzliche Informationen enthalten, welche zum Beispiel zur Erzeugung zusätzlicher Signale 13 dienen können.

Mit dem Multiplexer 7 können abwechselnd mehrere Encoder 14-1 bis 14-N mit der bidirektionalen Schnittstelle über Umrichter 1 zugeschaltet werden. Die Ansteuerung des Multiplexers 7 erfolgt somit ohne zusätzliche Leitungen über die bereits vorhandenen Encodersignale. Bei dem vom Umrichter 1 gesandten Befehl kann es sich auch um Bitkombination handeln, die vom Geber als fehlerhaft angesehen wird. Der Decoder 15 hört den Datenstrom ab und steuert die Richtung der bidirektionalen Treiber 14b, 24b zum Encoder.

## Patentansprüche

1. Schalteinrichtung zur Ansteuerung wenigstens zweier Motoren (M; 14-1 bis 14-N), denen jeweils ein Feedback-Sensor (R; 24B) und ein einziger Umrichter (1, 1') zugeordnet ist, der über Steuer- und Rückmeldeleitungen (3, 8; 3', 5'; 16-1 bis 16N; 18-1 bis 18-N) mit dem Motor (M; 14-1 bis 14-N) verbunden und an den wenigstens eine Logikbaustufe (6, 6'; 15) angeschlossen ist, die die vom Umrichter (1, 1') kommenden Signale auswertet und ein Steuersignal erzeugt, mit dem der gewünschte Motor (M; 14-1 bis 14-N) ansteuerbar ist,
**dadurch gekennzeichnet, dass** die Logikbaustufe (6, 6'; 15) an einen Ausgang (4) des Umrichters (1, 1') angeschlossen ist, der mit einem Eingang für Signale der Feedback-Sensoren (R; 24B) versehen ist, die im Umrichter (1, 1') ausgewertet und über den Ausgang (4) dem Logikbaustein (6, 6'; 15) zur Umschaltung auf den entsprechenden Motor (M; 14-1 bis 14-N) und den zugehörigen Feedback-Sensor (R; 24B) zugeführt werden.

2. Schalteinrichtung nach Anspruch 1,
**dadurch gekennzeichnet, dass** mit dem Schaltsignal der Logikbaustufe (6, 6'; 15) mindestens zwei Schalter (3, 7; 3', 7') schaltbar sind, mit denen die Leistungs- und die Rückmeldeleitungen (3, 8; 3', 5'; 16-1 bis 16-N; 18-1 bis 18-N) des jeweils anzusteuernden Motors (M; 14-1 bis 14-N) zuschaltbar sind.

3. Schalteinrichtung nach Anspruch 2,
**dadurch gekennzeichnet, dass** die Schalter (3, 7; 3', 7') als Multiplexer ausgebildet sind.

4. Schalteinrichtung nach Anspruch 2 oder 3,
**dadurch gekennzeichnet, dass** die beiden Schalter (3, 7; 3', 7') gleichzeitig schaltbar sind.

5. Schalteinrichtung nach einem der Ansprüche 1 bis 4,
**dadurch gekennzeichnet, dass** die Rückmeldeleitung (5') eine bidirektionale Leitung ist.

6. Schalteinrichtung nach einem der Ansprüche 1 bis 5,
**dadurch gekennzeichnet, dass** in der Logikbaustufe (6, 6'; 15) die Positions-Istwerte der Motoren (M; 14-1 bis 14-N) bei nicht absolut messenden Rückmeldesystemen speicherbar sind.

7. Schalteinrichtung nach einem der Ansprüche 1 bis 6,
**dadurch gekennzeichnet, dass** die Logikbaustufe (6, 6'; 15) Teil einer Umschaltbaugruppe (9, 9') ist.

8. Schalteinrichtung nach Anspruch 7,
**dadurch gekennzeichnet, dass** die Umschaltbaugruppe (9, 9') Leistungsschalter (3, 3') für die Motoren (M; 14-1 bis 14-N) aufweist.

9. Schalteinrichtung nach Anspruch 8,
**dadurch gekennzeichnet, dass** die Leistungsschalter (3, 3') der Motoren (M; 14-1 bis 14-N) außerhalb der Umschaltbaugruppe (9, 9') angeordnet sind.

10. Schalteinrichtung nach Anspruch 8,
**dadurch gekennzeichnet, dass** die Leistungsschalter (3, 3') der Motoren (M; 14-1 bis 14-N) von der Umschaltbaugruppe (9, 9') ansteuerbar sind.

11. Schalteinrichtung nach einem der Ansprüche 1 bis 10,
**dadurch gekennzeichnet, dass** der Umrichter (1, 1') mit einer Betriebssoftware ausgestattet ist, welche eine Verwaltung, Istwert-Erfassung und Ansteuerung von mehreren verschiedenen, sequentiell betriebenen Positionierachsen erlaubt.

12. Schalteinrichtung nach einem der Ansprüche 3 bis 11,
**dadurch gekennzeichnet, dass** der Multiplexer (7)N bidirektionale Datenleitungen (18-1 bis 18-N) umschaltet.

13. Einrichtung nach einem der Ansprüche 1 bis 12,
**dadurch gekennzeichnet, dass** bei Verwendung von Schnittstellen mit einem CLOCK-Signal zugehörige Treiber (11a) bei allen inaktiven Schnittstellen über ein Signal "output enable" OE (12) deaktivierbar sind.

14. Einrichtung nach einem der Ansprüche 3 bis 13,
**dadurch gekennzeichnet, dass** der Decoder (15) zusätzliche Signale (13) generiert, die unabhängig von der Ansteuerung des Multiplexers (7) sein können.

## Claims

1. Switching device for controlling at least two motors (M; 14-1 to 14-N), to which motors there is assigned one feedback sensor (R; 24B) each and a single converter (1, 1') which is connected to the motor (M; 14-1 to 14-N) via control and feedback lines (3, 8; 3', 5'; 16-1 to 16-N; 18-1 to 18-N) and to which is connected at least one logic module (6, 6'; 15) which evaluates the signals coming from the converter (1, 1') and generates a control signal, by which the desired motor (M; 14-1 to 14-N) can be controlled,
**characterised in that** the logic module (6, 6'; 15) is connected to an output (4) of the converter (1, 1'), which is provided with an input for signals of the feedback sensors (R; 24B), which are evaluated in the converter (1, 1') and supplied via the output (4) to the logic module (6, 6'; 15) for the switching to the corresponding motor (M; 14-1 to 14-N) and the associated feedback sensor (R; 24B).

2. Switching device according to Claim 1,
**characterised in that** the switching signal of the logic module (6, 6'; 15) can switch at least two switches (3, 7; 3', 7'), by which the power and feedback lines (3, 8; 3', 5'; 16-1 to 16-N; 18-1 to 18-N) of the respective motor (M; 14-1 to 14-N) to be controlled can be connected.

3. Switching device according to Claim 2,
**characterised in that** the switches (3, 7; 3', 7') are configured as multiplexers.

4. Switching device according to Claim 2 or 3, **characterised in that** the two switches (3, 7; 3', 7') can be switched simultaneously.

5. Switching device according to one of Claims 1 to 4, **characterised in that** the feedback line (5') is a bidirectional line.

6. Switching device according to one of Claims 1 to 5, **characterised in that** the actual position values of the motors (M; 14-1 to 14-N) can be stored in the logic module (6, 6'; 15) with feedback systems which are not absolute measuring systems.

7. Switching device according to one of Claims 1 to 6, **characterised in that** the logic module (6, 6'; 15) is part of a switching assembly (9, 9').

8. Switching device according to Claim 7, **characterised in that** the switching assembly (9, 9') has power switches (3, 3') for the motors (M; 14-1 to 14-N).

9. Switching device according to Claim 8, **characterised in that** the power switches (3, 3') of the motors (M; 14-1 to 14-N) are arranged outside the switching assembly (9, 9').

10. Switching device according to Claim 8, **characterised in that** the power switches (3, 3') of the motors (M; 14-1 to 14-N) can be controlled by the switching assembly (9, 9').

11. Switching device according to one of Claims 1 to 10,
**characterised in that** the converter (1, 1') is provided with operating software enabling administration, actual-value acquisition and control of a plurality of different, sequentially operated positioning axes.

12. Switching device according to one of Claims 3 to 11,
**characterised in that** the multiplexer (7) switches N bidirectional data lines (18-1 to 18-N).

13. Device according to one of Claims 1 to 12,
**characterised in that**, when using interfaces with a CLOCK signal, associated drivers (11a) can be deactivated for all inactive interfaces via a signal "output enable" OE (12).

14. Device according to one of Claims 3 to 13,
**characterised in that** the decoder (15) generates additional signals (13) which may be independent of the control of the multiplexer (7).

## Revendications

1. Dispositif de commutation pour commander au moins deux moteurs (M ; 14-1 à 14-N), auxquels un capteur de rétroaction (R ; 24B) et un unique convertisseur (1, 1') sont respectivement associés, qui est relié au moteur (M ; 14-1 à 14-N) par l'intermédiaire de lignes de commande et de répétition (3, 8 ; 3', 5' ; 16-1 à 16-N ; 18-1 à 18-N) et est connecté à au moins un étage logique (6, 6' ; 15), qui évalue les signaux provenant du convertisseur (1, 1') et génère un signal de commande, grâce auquel le moteur désiré (M ; 14-1 à 14-N) peut être commandé,
**caractérisé en ce que** l'étage logique (6, 6' ; 15) est relié à une sortie (4) du convertisseur (1, 1'), qui est muni d'une entrée pour les signaux des capteurs de rétroaction (R ; 24B), qui sont évalués dans le convertisseur (1, 1') et délivrés par l'intermédiaire de la sortie (4) au composant logique (6, 6' ; 15) en vue de la commutation sur le moteur approprié (M ; 14-1 à 14-N) et au capteur de rétroaction associé (R ; 24B).

2. Dispositif de commutation selon la revendication 1,
**caractérisé en ce que** grâce au signal de commutation de l'étage logique (6, 6' ; 15), au moins deux commutateurs (3, 7 ; 3', 7') peuvent être commutés, grâce auxquels les lignes de capacité et de répétition (3, 8 ; 3', 5' ; 16-1 à 16-N ; 18-1 à 18-N) du moteur à commander respectif (M ; 14-1 à 14-N) peuvent être raccordées.

3. Dispositif de commutation selon la revendication 2,
**caractérisé en ce que** les commutateurs (3, 7 ; 3', 7') sont réalisés sous la forme de multiplexeurs.

4. Dispositif de commutation selon la revendication 2 ou 3,
**caractérisé en ce que** les deux commutateurs (3, 7; 3', 7') peuvent être commutés simultanément.

5. Dispositif de commutation selon l'une des revendications 1 à 4,
**caractérisé en ce que** la ligne de répétition (5') est une ligne bidirectionnelle.

6. Dispositif de commutation selon l'une des revendications 1 à 5,
**caractérisé en ce que** la valeur réelle de position des moteurs (M ; 14-1 à 14-N) peut être mémorisée dans l'étage logique (6, 6' ; 15) dans le cas de systèmes de répétition non absolus.

7. Dispositif de commutation selon l'une des revendications 1 à 6,
**caractérisé en ce que** l'étage logique (6, 6' ; 15) est une partie d'un module de commutation (9, 9').

8. Dispositif de commutation selon la revendication 7,
**caractérisé en ce que** le module de commutation (9, 9') comporte des disjoncteurs (3, 3') pour les moteurs (M ; 14-1 à 14-N).

9. Dispositif de commutation selon la revendication 8,
**caractérisé en ce que** les disjoncteurs (3, 3') des moteurs (M ; 14-1 à 14-N) sont disposés à l'extérieur du module de commutation (9, 9').

10. Dispositif de commutation selon la revendication 8,
**caractérisé en ce que** les disjoncteurs (3, 3') des moteurs (M ; 14-1 à 14-N) peuvent être commandés par le module de commutation (9, 9').

11. Dispositif de commutation selon l'une des revendications 1 à 10,
**caractérisé en ce que** le convertisseur (1, 1') est équipé d'un logiciel de fonctionnement, qui permet une gestion, une détection de valeur réelle et une commande de plusieurs axes de positionnement différents actionnés séquentiellement.

12. Dispositif de commutation selon l'une des revendications 3 à 11,
**caractérisé en ce que** le multiplexeur (7) commute N lignes de données bidirectionnelles (18-1 à 18-N).

13. Dispositif selon l'une des revendications 1 à 12,
**caractérisé en ce que**, lors de l'utilisation d'interfaces comportant un signal d'horloge, les pilotes associés (11a) peuvent être désactivés par l'intermédiaire d'un signal "output enable" OE (12) au cas où toutes les interfaces sont inactives.

14. Dispositif selon l'une des revendications 3 à 13,
**caractérisé en ce que** le décodeur (15) génère des signaux supplémentaires (13), qui peuvent être indépendants de la commande du multiplexeur (7).
